# EUROPÄISCHE PATENTSCHRIFT

(11) **EP 3 092 090 B1**
(45) Veröffentlichungstag und Bekanntmachung des Hinweises auf die Patenterteilung: **03.01.2018**
(21) Anmeldenummer: 15708693.5
(22) Anmeldetag: 08.01.2015
(51) Int. Cl.: B21D 5/02, B21D 37/14

(54) **WERKZEUGSPEICHERSYSTEM FÜR BIEGEWERKZEUGE**
TOOL STORAGE SYSTEM FOR BENDING TOOLS
SYSTÈME DE STOCKAGE D'OUTILS POUR OUTILS DE PLIAGE

(30) Priorität: 09.01.2014 AT 500152014
(43) Veröffentlichungstag der Anmeldung: 16.11.2016
(73) Patentinhaber: TRUMPF Maschinen Austria GmbH & Co. KG., 4061 Pasching (AT)
(72) Erfinder: DENKMEIER, Thomas, 4050 Traun (AT); OSTER, Markus, 4030 Linz (AT); WALTER, Otto, 4574 Vorderstoder (AT)
(74) Vertreter: Burger, Hannes
(86) Internationale Anmeldenummer: PCT/AT2015/050006
(87) Internationale Veröffentlichungsnummer: WO 2015/103657

(56) Entgegenhaltungen:
- EP-A2- 2 138 247
- AT-A4- 511 959
- CH-A5- 668 035
- JP-U- H0 683 121

## Beschreibung

Die Erfindung betrifft ein Werkzeugspeichersystem mit einer Werkzeugspeichereinheit und darin zu lagernden Biegewerkzeugen gemäß dem Obergriff des Anspruchs 1.

Im Zuge von Biegevorgängen zur Formgebung von Werkstücken, insbesondere metallischen Werkstücken, ist beispielsweise bei einer Umstellung der Produktion, aber auch während der Bearbeitung eines Werkstückes, häufig ein Auswechseln der Biegewerkzeuge an der Biegevorrichtung erforderlich. Eine Fertigungseinrichtung für Biegeprozesse weist daher häufig zusätzlich zur eigentlichen Biegepresse und einer Handhabungseinrichtung für die Manipulation der Werkstücke, einen Werkzeugspeicher auf, in welchem Werkzeugspeicher die Biegewerkzeuge von einer Handhabungseinrichtung entnehmbar und/oder deponierbar sind.

Eine solche Fertigungseinrichtung für Biegeprozesse mit inkludiertem Werkzeugspeicher ist beispielsweise in der AT 511 959 A4 gezeigt. In diesem Dokument ist eine Biegepresse gezeigt, welche wie dies üblich ist, zwei gegenüberliegende, zur Aufnahme von Biegewerkzeugen geeignete Pressbalken aufweist, wobei mindestens einer der Pressbalken verstellbar ausgeführt ist Bei beiden Pressbalken sind Werkzeughalterungen zur Bestückung mit, bzw. Fixierung von Biegewerkzeugen ausgestaltet. Für den automatisieren Werkteil- und Werkzeugtransfer ist eine Handhabungseinrichtung vorgesehen, wobei die Biegewerkzeuge durch die Handhabungseinrichtung aus einem separat angeordnetem Werkzeugspeicher entnommen bzw, in diesem abgelegt werden können. Zur Zwischenlagerung der Biegewerkzeuge im Werkzeugspeicher sind wiederum Werkzeughaltevorrichtungen vorgesehen. Sowohl zur Befestigung in der Biegepresse, als auch zur Lagerung im Werkzeugspeicher weisen die Biegewerkzeuge einen Befestigungsabschnitt auf, welcher mit den Werkzeughalterungen sowohl der Pressbalken als auch den Halterungsvorrichtungen des Werkzeugspeichers zusammenwirken kann. Die Halterungen des Werkzeugspeichers sind in einer Reihe senkrecht übereinander angeordnet, wobei die Befestigungsabschnitte der Biegewerkzeuge in den jeweiligen Werkzeughalterungen abgelegt bzw. eingesenkt werden können. Die gezeigte Art der Werkzeughalterung im Werkzeugspeicher erlaubt zwar guten, automatisierten Zugriff auf jedes Biegewerkzeug, jedoch ist die Werkzeug-Packungsdichte abhängig von der Längserstreckung der Werkzeuge, und dadurch limitiert.

In der CH 669 035 A5 ist eine Biegepresse offenbart, bei welcher mittels Armen einer Manipulationsvorrichtung Biegewerkzeuge zwischen zwei Rahmen der Presse und einer Speichervorrichtung transferiert werden. Die Biegewerkzeuge weisen durchgängige L6cher auf, in welche zum Transferieren die Arme der Manipulationsvorrichtung hindurchgeschoben werden. Die Speichervorrichtung weist Stifte zur hakenartigen Halterung der Biegewerkzeuge via die Löcher auf.

In der JP H06 83121 U ist eine Speichervorrichtung für Biegewerkzeuge mit gekippt geformten Halteblechen offenbart. Die Biegewerkzeug werden wiederum über ihren Befestigungsabschnitt in die Haltebleche abgelegt.

Es ist ein wesentliches Erfordernis an Werkzeugspeichersysteme für Biegewerkzeuge, eine Stapelung der eingelagerten Biegewerkzeuge zu gewährleisten, welche eine gute Zugriffsmöglichkeit auf jedes einzelne Biegewerkzeug erlaubt. Gleichzeitig ist es vorteilhaft, eine hohe Packungsdichte der Biegewerkzeuge zu erreichen, damit Werkzeugspeicher eine möglichst hohe Anzahl an Biegewerkzeugen angeordnet werden kann.
Die Aufgabe der Erfindung besteht darin, ein Werkzeugspeichersystem bereitzustellen, welches hinsichtlich der Anordnung der zu speichernden Biegewerkzeuge optimiert ist. Insbesondere soll das Werkzeugspeichersystem eine gute und sichere Zugriffsmöglichkeit der Biegewerkzeuge, speziell durch eine automatisiert verfahrbare Handhabungseinrichtung, gewährleisten, und gleichzeitig eine möglichst hohe Anzahl an erreichbaren Biegewerkzeugen bereitstellen.

Diese Aufgabe wird durch das Werkzeugspeichersystem mit den Merkmalen gemäß Anspruch 1 gelöst.
Dadurch, dass die Biegewerkzeuge zusätzlich zu einem Befestigungsabschnitt für die Halterung bzw. Befestigung der Biegewerkzeuge in einer Biegepresse, einen separat ausgestalteten Halterungsabschnitt aufweisen, wird eine verbesserte Flexibilität hinsichtlich Anordnungsmöglichkeiten der Biegewerkzeuge in einer Werkzeugspeichereinheit erreicht. Insbesondere kann ein derartiger Halterungsabschnitt des Biegewerkzeugs an einen jeweiligen Gegenabschnitt eines Haltemittels einer Halteschiene der Werkzeugspeichereinheit angepasst bzw. mit dem Haltemittel abgestimmt sein, sodass der Halterungsabschnitt mit dem Haltemittel in vorteilhafter Art und Weise zusammenwirkt. Dadurch sind variable, von der Ausgestaltung des Befestigungsabschnitts unabhängige Anordnungen der Biegewerkzeuge in der Werkzeugspeichereinheit ermöglicht, um einerseits eine gute, betriebssichere Zugriffsmöglichkeit auf die Biegewerkzeuge zu gewährleisten, und andererseits eine möglichst platzsparende Anordnung bzw. Stapelung der Biegewerkzeuge zu erreichen. Vorteilhaft hierbei ist, dass für die Handhabungseinrichtung bzw. für eine große Vielfalt an durchzuführenden Biegeprozessen eine große Palette an Biegewerkzeugen bereitgestellt ist, sodass etwa die Notwendigkeit für manuelle Eingriffe, beispielsweise ein manuelles Auswechseln von Biegewerkzeugen weitgehend minimiert ist.

Eine zweckmäßige, weil einerseits betriebssichere und dennoch vergleichsweise einfach zu realisierende Art des Zusammenwirkens zwischen Haltemittel und Halterungsabschnitt wird dadurch erreicht, dass ein Haltemittel durch eine Aufnahmekontur in Form einer Aufnahmenut gebildet ist, und als Zusammenwirkungselement ein Halterungsabschnitt am Biegewerkzeug in Form eines Einsteckfortsatzes ausgestaltet ist. Dadurch kann eine ablagesichere, formschlüssige Aufnahme des Biegewerkzeugs an einer Halteschiene der Werkzeugspeichereinheit ermöglicht werden.

Eine Verbesserung der Genauigkeit und der Betriebssicherheit der Entnahme- und Ablagevorgänge beim Wechsel eines Biegewerkzeugs kann dadurch erreicht werden, dass an einem Biegewerkzeug ein Greifabschnitt ausgebildet ist, welcher speziell zum Zusammenwirken mit einem entsprechenden Greifwerkzeug einer Handhabungsvorrichtung vorgesehen ist. Dadurch kann insbesondere die Fehleranfälligkeit eines Biegewerkzeugwechselvorgangs minimiert werden. Weiters kann dadurch ein Zugriff auf das Biegewerkzeug am seinem Befestigungsabschnitt umgangen bzw. vermieden werden, was deswegen vorteilhaft ist, da ein Zugriff am Befestigungsabschnitt eine komplizierte, umständliche Handhabungshandlung im Sinne eines Umgreifens erforderlich machen würde, um das Werkzeug in seine Arbeits- bzw. Wirkstellung in der Biegepresse zu überführen.

Besonders vorteilhaft ist in diesem Zusammenhang eine Ausgestaltung eines Greifabschnitts in Form einer Greifnut. Durch diese Maßnahme kann eine Handhabungsvorrichtung mittels einem möglichst genau auf die Greifnut abgestimmten Greiffortsatz ein Biegewerkzeug mit geringer Fehleranfälligkeit aus einer Werkzeugspeichereinheit entnehmen und zu einer Biegepresse transferieren. Ebenso ist die anschließende Wiederablage des Biegewerkzeugs in der Werkzeugspeichereinheit mit erhöhter Präzision gewährleistet.

Ein Zugriff auf ein Biegewerkzeug am Halterungsabschnitt, welcher speziell für das Zusammenwirkung mit einem Haltemittel einer Werkzeugspeichereinheit ausgestaltet ist, ist insbesondere für eine automatisierte Handhabungsvorrichtung für gewöhnlich blockiert oder zumindest nur erschwert möglich. Daher ist es von Vorteil, wenn ein Halterungsabschnitt und ein Greifabschnitt bezogen auf eine vom Befestigungsabschnitt zu einem beim Biegen auf ein Werkstück einwirkenden Wirkabschnitt verlaufende Arbeitsrichtung des Biegewerkzeugs auf gegenüberliegenden Seiten des Biegewerkzeugs angeordnet sind.

In den meisten Fällen ist es zweckmäßig, die Biegewerkzeuge aus mehr als einem Bauteil aufzubauen, und diese einzelnen Bauteile form- und/oder kraftschlüssig miteinander zu verbinden. Dadurch kann die Betriebs-Flexibilität verbessert, und insbesondere eine höhere, universelle Einsetzbarkeit der Biegewerkzeuge in unterschiedlichen Biegepressen und/oder Werkzeugspeichereinheiten erreicht werden.

In diesem Zusammenhang ist es von besonderem Vorteil, wenn das Biegewerkzeug mindestens aus einem Grundkörper und einem Halteteil aufgebaut ist. Dadurch ist die Anordnung der Wirkabschnitte quasi baulich getrennt von Befestigungsabschnitten und Halterungsabschnitten möglich. Durch eine solche Maßnahme können außerdem Standardbiegewerkzeuge, welche nur einen Wirkabschnitt und einen Befestigungsabschnitt aufweisen, in einer erfindungsgemäßen Werkzeugspeichereinheit eingelagert werden, indem ein Standardbiegewerkzeug durch den Halteteil um einen Halterungsabschnitt ergänzt sind.

Zur Verbesserung der Erreichbarkeit eines Biegewerkzeugs mittels eines Greifwerkzeugs einer Handhabungseinrichtung ist es weiters zweckmäßig, den entsprechenden Greifabschnitt des Biegewerkzeugs ebenfalls im Halteteil anzuordnen, da der Halteteil eines Biegewerkzeugs bei der bevorzugten Lagerungsrichtung der Biegewerkzeuge näher an der Handhabungsvorrichtung angeordnet ist als der Grundkörper.

Um einen möglichst ungehinderten Zugriff auf ein Biegewerkzeug zu ermöglichen, ohne dafür Speicherplatz zu opfern, ist es besonders vorteilhaft, zumindest eine Gruppe von aufeinanderfolgenden Halteschienen und/oder Haltemitteln und/oder Halterungsabschnitten derart auszugestalten bzw. anzuordnen bzw. aufeinander abzustimmen, dass eine vom Befestigungsabschnitt zu einem beim Biegen auf ein Werkstück einwirkenden Wirkabschnitt verlaufende Arbeitsrichtung der Biegewerkzeuge zu einer sich senkrecht auf eine Aufstandsfläche erstreckenden Vertikalen um einen Schrägungswinkel, zum Beispiel um einen Schrägungswinkel zwischen 20° und 70° geneigt ist. Dadurch kann erreicht werden, dass sich im eingelagertem Zustand eines Biegewerkzeugs ein zum Zusammenwirken mit einem Greifwerkzeug einer Handhabungsvorrichtung vorgesehener Greifabschnitt in horizontaler Richtung gesehen weiter in die für den Zugriff durch eine Handhabungsvorrichtung vorgesehenen Zugriffsseite hineinragt als der Halterungsabschnitt, und somit der Greifabschnitt für die Handhabungsvorrichtung leichter erreichbar ist. Gleichzeitig ist mit dieser Maßnahme erreicht, dass der Abstand zwischen den Halteschienen unabhängig von der Längserstreckung in Arbeitsrichtung der Biegewerkzeuge bleiben kann, wodurch eine höhere Packungsdichte der Biegewerkzeuge in der Werkzeugspeichereinheit ermöglicht ist, und ein kleinerer Bauraum der Werkzeugspeichereinheit resultiert.

Durch Neigung der Wirkabschnitte der Biegewerkzeuge in einem oberen Teilbereich der Werkzeugspeichereinheit nach oben, und in einem unteren Teilbereich der Werkzeugspeichereinheit nach unten, wird die Anzahl der von der Handhabungsvorrichtung erreichbaren Biegewerkzeuge nochmals deutlich erhöht. Aufgrund dessen ist eine insgesamt größere Konstruktion der Werkzeugspeichereinheit hinsichtlich der Bauhöhe möglich, bzw. können mehr Halteschienen zur Halterung der Biegewerkzeuge entlang der Höhenerstreckung der Werkzeugspeichereinheit angeordnet werden.

Zur Optimierung der oben beschriebenen Vorteile ist ein Schrägungswinkel zwischen 30° und 45° besonders zweckmäßig, da dies einen optimierten Kompromiss zwischen Erreichbarkeit des Greifabschnitts, und hoher Packungsdichte darstellt.

Um eine möglichst universelle Speicherbarkeit für die Biegewerkzeuge zu erreichen, ist es von Vorteil zumindest einen Halterungsabschnitt eines Biegewerkzeugs so zu gestalten, dass dieser sowohl zum Zusammenwirken mit einem zum oberen Ende der Werkzeugspeichereinheit geneigten Haltemittel, als auch mit einem zum unteren Ende der Werkzeugspeichereinheit geneigten Haltemittel geeignet ist. Dadurch ist eine Speicherung wahlweise im oberen Teilbereich der Werkzeugspeichereinheit, oder aber in deren unteren Teilbereich ermöglicht.

Auf eine besonders einfache, aber dennoch effektive Art und Weise kann dies erreicht werden, indem zumindest ein Halterungsabschnitt mindestens zwei Einsteckfortsätze aufweist, wobei ein erster Einsteckfortsatz zum Zusammenwirken mit einer Aufnahmenut einer im oberen Teilbereich angeordneten Halteschiene ist, und ein zweiter Einsteckfortsatz zum Zusammenwirken mit einer Aufnahmenut einer im oberen Teilbereich angeordneten Halteschiene, ausgestaltet ist. So kann ein Biegewerkzeug wahlweise in einer nach oben hin geneigten Halteschiene, aber auch durch Drehen des Biegewerkzeugs um 180 um die Arbeitsrichtung 21 in einer nach unten geneigten Halteschiene gelagert werden.

Zum besseren Verständnis der Erfindung wird diese anhand der nachfolgenden Figuren näher erläutert.

Es zeigen jeweils in stark vereinfachter, schematischer Darstellung:
- Fig. 1: eine Werkzeugspeichereinheit mit einigen eingelagerten Biegewerkzeugen in perspektivischer Darstellung;
- Fig. 2: eine Seitenschnittansicht eines Teilbereichs eines Werkzeugspeichersystems mit einigen eingelagerten Biegewerkzeugen;
- Fig. 3: ein Biegewerkzeug und eine Halteschiene in einer weiteren Ausführungsform.

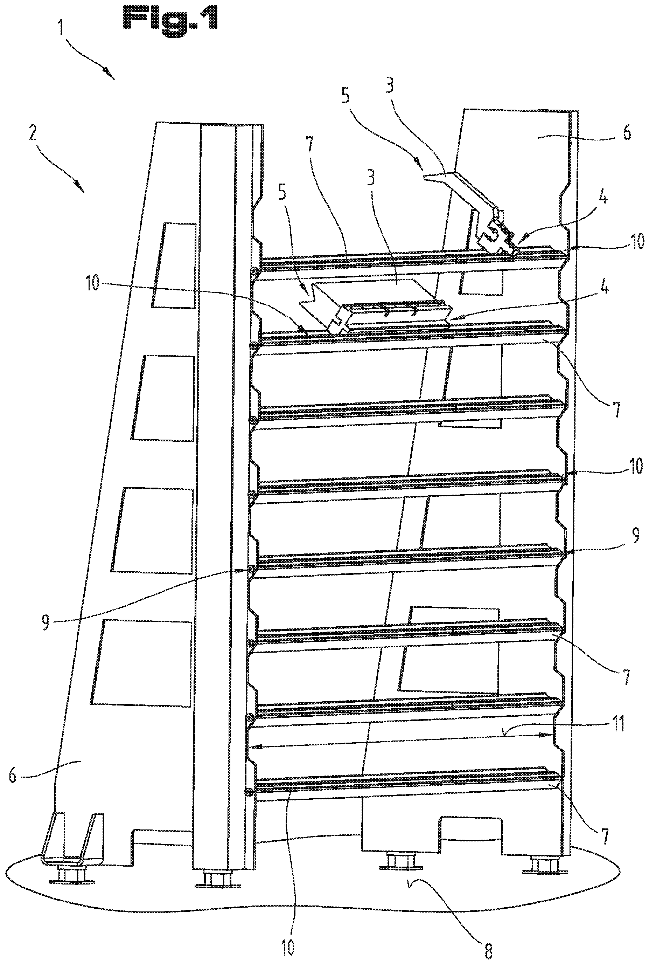

In der Fig. 1 ist ein Ausführungsbeispiel für ein Werkzeugspeichersystem 1, umfassend zumindest eine Werkzeugspeichereinheit 2 mit regalartigem Aufbau und einige eingelagerte Biegewerkzeuge 3, gezeigt. Anzumerken ist hierbei, dass aus Gründen der Übersichtlichkeit in Fig. 1 nur einige Biegewerkzeuge 3 beispielhaft gezeichnet sind. Im realen Betrieb bzw. der Benutzung des Werkzeugspeichersystems 1 wird der Werkzeugspeicher 2 mit einer möglichst hohen Anzahl an Biegewerkzeugen 3 bestückt sein, um eine möglichst hohe Auswahl an Biegewerkzeugen 3 bereitzustellen, und somit eine hohe Bandbreite an unterschiedlichen Arbeitsvorgängen bzw. Biegevorgängen zu ermöglichen.

Wie an sich bekannt weisen die Biegewerkzeuge 3 zur Verwendung in einer Biegepresse, welche in Fig. 1 nicht gezeigt ist, zumindest einen Befestigungsabschnitt 4 auf, mit welchem eine Befestigung der Biegewerkzeuge in mit entsprechend Werkzeughalterungen versehenen Pressbalken einer Biegepresse erfolgen kann. Weiters sind an den Biegewerkzeugen 3 Wirkabschnitte 5 ausgebildet, deren Ausgestaltungsform sich im Wesentlichen aus der Art des zu bearbeitenden Werkstücks bzw. aus der Art des durchzuführenden Biegevorgangs ergibt.

Im gezeigten Ausführungsbeispiel besteht eine Werkzeugspeichereinheit 2 bzw. ein Teil eines Werkzeugspeichers baulich aus zwei Seitenwänden 6 zwischen welchen Halteschienen 7 angeordnet sind. Die Halteschienen 7 erstrecken sich dabei zumindest annähernd waagrecht von einer Seitenwand 6 zur anderen, bzw. sind zumindest annähernd parallel zu einer Aufstandsfläche 8 der Werkzeugspeichereinheit 2 ausgerichtet. Jede der Halteschienen 7 weist daher zwei Befestigungsbereiche auf, und zwar jeweils einen Befestigungsbereich 9 an je einer der beiden Seitenwände 6. Selbstverständlich ist es zur Bildung eines Werkzeugspeichers möglich, mehrere derartige Werkzeugspeichereinheiten 2 nebeneinander und/oder übereinander anzuordnen, um ein möglichst großes Raumvolumen für die Lagerung der Biegewerkzeuge 3 bereitzustellen.

Alternativ zu der in Fig. 1 gezeigten Ausgestaltung sind natürlich auch abweichende Ausgestaltungsformen einer Werkzeugspeichereinheit, wie zum Beispiel eine sich wiederholende T-förmige Anordnung der Halteschienen entlang zweier Seiten eines sich zumindest annähernd senkrecht zur Aufstandsfläche erstreckenden Gestänges oder dergleichen möglich.

Zur Aufnahme bzw. sicheren Lagerung der Biegewerkzeuge 3 weist jede der Halteschienen 7 zumindest ein Haltemittel 10 auf, welches hinsichtlich seiner Aufnahmekontur in verschiedenster Art und Weise an zu speichernde Biegewerkzeuge 3 angepasst ist. Dabei kann sich ein Haltemittel 10 über die gesamte Länge 11 einer Halteschiene 7 erstrecken, oder aber nur in einem Teilbereich der Halteschiene 7 ausgebildet sein, sodass mehrere Haltemittel 10 entlang einer Halteschiene 7 angeordnet sind, und die Halteschiene 7 quasi in Teilbereiche zur Halterung der Biegewerkzeuge 3 unterteilt ist.

Grundsätzlich sind selbstverständlich verschiedene Ausgestaltungsformen der Haltemittel 10 denkbar, wobei es essentiell ist, dass die jeweiligen an einer Halteschiene 7 ausgebildeten Haltemittel 10 derart ausgestaltet sind, dass sie mit entsprechenden, an den Biegewerkzeugen 3 ausgebildeten Gegenstücken bzw. Gegenabschnitten zusammenwirken können, um eine sichere Zwischenlagerung der Biegewerkzeuge zu ermöglichen.

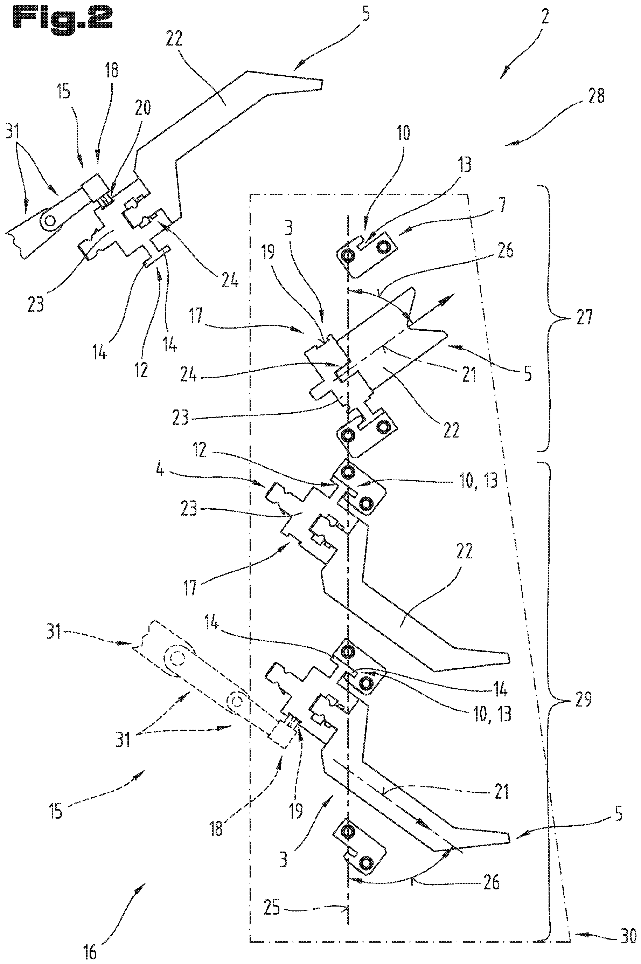

Eine mögliche Ausgestaltungsform der Haltemittel 10 bzw. von zum Zusammenwirken mit diesen Haltemitteln 10 geeigneten Gegenabschnitten in Form von an den Biegewerkzeugen 3 ausgebildeten Halterungsabschnitten 12 der Biegewerkzeuge 3 ist in Fig. 2 dargestellt.

Wesentlich ist hierbei, dass die an den Biegewerkzeugen 3 ausgestalteten Halterungsabschnitte 12 zusätzlich zu bzw. baulich separat von den Befestigungsabschnitten 4 zur Befestigung in einem Pressbalken einer Biegepresse angeordnet sind.

In der Fig. 2 ist eine weitere und gegebenenfalls für sich eigenständige Ausführungsform der/des Werkzeugspeichersystems 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die Beschreibung in der vorangegangenen Fig. 1 hingewiesen bzw. Bezug genommen.

Im in Fig. 2 gezeigten Ausführungsbeispiel ist das Haltemittel 10 durch eine Aufnahmenut 13 gebildet, welche zum Zusammenwirken mit einem entsprechenden, am Biegewerkzeug 3 ausgebildeten Halterungsabschnitt 9 in Form eines Einsteckfortsatzes 14 ausgestaltet ist. Bei dieser Ausgestaltungsvariante des Haltemittels 10 bzw. des Halterungsabschnitts 12 kann somit ein Biegewerkzeug 3 von einer Handhabungsvorrichtung 15 an einer für den Zugriff durch die Handhabungsvorrichtung 15 vorgesehenen Zugriffsseite 16 der Werkzeugspeichereinheit 2 durch Einführen eines Einsteckfortsatzes 14 des Biegewerkzeugs 3 in eine entsprechende Aufnahmenut 13 der Halteschiene 7 und anschließendem Loslassen des Biegewerkzeugs 3 bewerkstelligt werden. Das entsprechende Biegewerkzeug 3 ist dann im gezeigten Ausführungsbeispiel durch Zusammenwirkung des Einsteckfortsatzes 14 mit der Aufnahmenut 13 unter der Einwirkung der Schwerkraft sicher abgelegt.

Alternativ zu der in Fig. 2 gezeigten formschlüssigen Ausgestaltungsform der Haltemittel 10 und Halterungsabschnitten 12 sind natürlich weitere Ausgestaltungsformen denkbar, wobei auch grundsätzlich andere Arten des Zusammenwirkens von Haltemittel 10 und Halterungsabschnitt 12, wie zum Beispiel durch magnetische Wechselwirkung zwischen Haltemittel und Halterungsabschnitt, anwendbar sind.

In ähnlicher Weise wie oben für die an den Halteschienen 7 ausgebildeten Haltemittel 10 beschrieben, kann ein durchgehender Halterungsabschnitt 12 am Biegewerkzeug 3 ausgestaltet sein. Alternativ können auch mehrere Halterungsabschnitte 12 entlang einer Breitenerstreckung eines Biegewerkzeugs 3 gebildet sein, sodass eine Halterung des Biegewerkzeugs 3 durch Zusammenwirken mehrerer Halterungsabschnitte 12, zum Beispiel in Form von Hakenelementen, mit einem oder mehreren entlang einer Halteschiene 7 angeordneten Haltemittel(n) 10 bewerkstelligt ist.

Zur automatisierten Entnahme bzw. Ablage der Biegewerkzeuge kann es zweckmäßig sein, am Biegewerkzeug 3 einen Greifabschnitt 17 auszugestalten, sodass eine Handhabungsvorrichtung 15 mittels eines, Greifwerkzeugs 18 gezielt Zugriff auf das Biegewerkzeug erlangen kann. Dabei ist ein solcher Greifabschnitt 17 eines Biegewerkzeuges 3 zum Zusammenwirken mit dem jeweiligen Greifwerkzeug 18 ausgebildet. Für gewöhnlich kann das Greifwerkzeug 18 von der Handhabungsvorrichtung 15 für die Durchführung anderer Aufgaben als einen Werkzeugwechselvorgang, gegen andere Manipulationswerkzeuge ausgetauscht werden.

Bei der in Fig. 2 gezeigten Ausführungsform sind die Greifabschnitte 17 jeweils in Form einer Greifnut 19 ausgeformt, welche Greifnuten 19 mit einem Greifwerkzeug 18 in Form eines Greiffortsatzes 20 der Handhabungsvorrichtung 15 zusammenwirkt. Der Greiffortsatz 20 der Handhabungsvorrichtung 15 kann dabei zum Beispiel als radial nach außen verstellbares Spreizelement ausgeführt sein, um eine sichere Überführung eines Biegewerkzeuges 3 zwischen Werkzeugspeichereinheit und Biegepresse zu gewährleisten.

Alternativ sind natürlich weitere Ausgestaltungsformen für einen Greifabschnitt und/oder ein Greifwerkzeug möglich. Beispielsweise kann ein Greifwerkzeug durch ein Unterdruckelement, wie etwa einen Saugnapf gebildet sein, welches zum Zusammenwirken mit einem Greifabschnitt in Form einer glatten Fläche am Biegewerkzeug ausgestaltet ist. Weitere Varianten für ein Greifwerkzeug bzw. einen entsprechend ausgestalteten Greifabschnitt können je nach den vorliegenden Erfordernissen von einem auf diesem Gebiet tätigen Durchschnittsfachmann aus dem Stand der Technik ausgewählt werden.

Da der Zugriff auf ein Biegewerkzeug 3 am Halterungsabschnitt 12 in der Regel unmöglich, oder zumindest nur erschwert möglich ist, und ein Zugriff am Befestigungsabschnitt 4 eine komplizierte, umständliche Handhabungshandlung im Sinne eines Umgreifens erforderlich machen würde, ist es zweckmäßig, einen Halterungsabschnitt 12 und einen Greifabschnitt 17, bezogen auf eine vom Befestigungsabschnitt 4 zu einem beim Biegen auf ein Werkstück einwirkenden Wirkabschnitt 5 verlaufende Arbeitsrichtung 21 des Biegewerkzeugs 3, auf gegenüberliegenden Seiten des Biegewerkzeugs 3 anzuordnen, wie dies auch in Fig. 2 gezeigt ist.

Zur Erhöhung der Betriebs-Flexibilität, insbesondere zur Verbesserung der universellen Einsetzbarkeit der Biegewerkzeuge 3 in unterschiedlichen Biegepressen und/oder Werkzeugspeichereinheiten kann es außerdem sinnvoll sein, die Biegewerkzeuge 3 aus mehr als einem Bauteil aufzubauen, wobei die einzelnen Bauteile 22, 23 miteinander form- und/oder kraftschlüssig miteinander verbunden sind. Die Verbindungselemente 24 zwischen den Bauteilen 22, 23 können je nach Bedarf auf an sich bekannte Weise von einem auf diesen Gebiet tätigen Durchschnittsfachmann ausgewählt bzw. konstruiert sein.

Eine zweckmäßige Variante einer derartigen Aufbauweise der Biegewerkzeuge ist in Fig. 2 exemplarisch dargestellt. Dabei besteht ein Biegewerkzeug 3 zumindest aus einem Grundkörper 22, welcher Grundkörper 22 den beim Biegevorgang auf ein Werkstück einwirkenden Wirkabschnitt 5 aufweist. Weiters ist zumindest ein Halteteil 23 ausgestaltet, wobei das Halteteil 23 zumindest den Befestigungsabschnitt 4 und den Halterungsabschnitt 12 des Biegewerkzeugs 3 aufweist. Die Ablage- bzw. Speicherungsrichtung der Biegewerkzeuge 3 wird dabei so gewählt, dass das Halteteil 23, bezogen auf das Biegewerkzeug 3 selbst, auf der Zugriffsseite 16 angeordnet ist, während der Grundkörper 22 mit dem Wirkabschnitt 5 auf der von der Zugriffsseite 16 abgewandten Seite der Werkzeugspeichereinheit 2 befindlich ist.

Wenn am Biegewerkzeug 3 ein Greifabschnitt 17 zum Zusammenwirken mit einem Greifwerkzeug 18 einer Handhabungsvorrichtung 15 ausgestaltet ist, kann es außerdem sinnvoll sein, auch einen solchen Greifabschnitt 17 am Halteteil 23 anzuordnen, da wie in Fig. 2 klar und deutlich zu sehen ist, der Zugriff für die Handhabungsvorrichtung 15 von der Zugriffsseite 16 dadurch erleichtert ist.

Wie aus Fig. 2 weiters ersichtlich ist, kann zumindest eine Gruppe von aufeinanderfolgenden Halteschienen 7 bzw. Haltemitteln 10 bzw. Halterungsabschnitten 12 zweckmäßigerweise so ausgestaltet bzw. so angeordnet bzw. aufeinander abgestimmt sein, dass eine vom Befestigungsabschnitt 4 zu einem beim Biegen auf ein Werkstück einwirkenden Wirkabschnitt 5 verlaufende Arbeitsrichtung 21 der Biegewerkzeuge 3 zu einer sich senkrecht auf eine Aufstandsfläche 8 erstreckenden Vertikalen 25 um einen Schrägungswinkel 26 geneigt ist.

Der Schrägungswinkel 26 kann dabei durch entsprechende Ausgestaltung eines oder mehrerer bzw. durch Zusammenwirken mehrerer der oben angegebenen Elemente 7, 10, 12 erreicht werden. Im in Fig. 2 gezeigten Ausführungsbeispiel, wird der Schrägungswinkel 26 dadurch erreicht, dass die Halteschienen 7 in der Werkzeugspeichereinheit 2 geneigt angeordnet sind. Dadurch ergibt sich eine entsprechende Schräglage der in Form einer Aufnahmenut 13 gebildeten Haltemittel 10. Weiters führt die Art der in Fig. 2 gezeigten Zusammenwirkung zwischen Aufnahmenut 13 und Einsteckfortsatz 14 zu einer geneigten Lagerung der Biegewerkzeuge 3, sodass deren Arbeitsrichtung 21 im Speicherungszustand um den Schrägungswinkel 26 geneigt ist.

Der Schrägungswinkel 26 kann auch durch andere Ausführungsformen der Halteschienen 7, Haltemittel 10, und/oder Halterungsabschnitte 12 generiert werden, wobei auch erst durch deren Zusammenwirken der Schrägungswinkel 26 generiert werden kann. Beispielsweise kann in einem Ausführungsform der Halterungsabschnitt eines Biegewerkzeugs bezogen auf die Arbeitsrichtung geneigt sein, sodas in einem solchen Fall die Halteschienen nicht geneigt angeordnet sein müssen. Besonders zweckmäßig sind Ausführungsformen, bei welchen sich im eingelagertem bzw. gespeicherten Zustand eines Biegewerkzeugs 3 ein zum Zusammenwirken mit einem Greifwerkzeug 18 einer Handhabungsvorrichtung 15 vorgesehener Greifabschnitt 17 in horizontaler Richtung gesehen weiter in die für den Zugriff durch eine Handhabungsvorrichtung 15 vorgesehenen Zugriffsseite 16 hineinragt als der Halterungsabschnitt 12, wie dies aus Fig. 2 klar ersichtlich ist.

Der Schrägungswinkel 26 kann zum Beispiel aus einem Bereich zwischen 20° und 70° ausgewählt werden, bevorzugt beträgt der Schrägungswinkel 26 zwischen 30° und 45°.

Um für eine Handhabungsvorrichtung 15 die Erreichbarkeit der eingelagerten Biegewerkzeuge 3 zu verbessern, ist es außerdem sinnvoll, wenn die Werkzeugspeichereinheit derart konstruiert wird, dass in einem oberen Teilbereich 27 der Werkzeugspeichereinheit 2 die Wirkabschnitte 5 der Biegewerkzeuge 3 zu einem oberen Ende 28 der Werkzeugspeichereinheit 2 geneigt sind, und in einem unteren Teilbereich 29 der Werkzeugspeichereinheit 2 die Wirkabschnitte 5 zu einem unteren Ende 30 der Werkzeugspeichereinheit 2 geneigt sind. Durch diese Maßnahme wird insbesondere bei Handhabungsvorrichtungen 15 in Form von üblichen, mehrgliedrigen Roboterarmen erreicht, dass die maximale Reichweite des Roboters, in welcher die Glieder des Roboterarmes 31 weitgehend gestreckt angeordnet sind und am Ende ein rechtwinklig dazu orientierter Greiffortsatz ausgebildet ist, genutzt werden kann, wie dies auch in Fig. 2 mit strichlierten Linien angedeutet ist. Im Vergleich zu herkömmlichen Lagerungsarten ist dadurch eine bezogen auf die Vertikale 25 größere Bauhöhe der Werkzeugspeichereinheit 2 ermöglicht.

In diesem Zusammenhang ist es zweckmäßig zumindest einen Halterungsabschnitt 12 eines Biegewerkzeugs 3 derart auszubilden, dass dieser sowohl zum Zusammenwirken mit einem zum oberen Ende 28 der Werkzeugspeichereinheit 2 geneigten Haltemittel 10 als auch mit einem zum einem unteren Ende 30 der Werkzeugspeichereinheit 2 geneigten Haltemittel 10 auszugestalten. Wie bereits beschrieben ist es dabei sinnvoll, das Werkzeugspeichersystem so aufzubauen, dass in einem oberen Teilbereich 27 der Werkzeugspeichereinheit 2 die Wirkabschnitte 5 der Biegewerkzeuge 3 zu einem oberen Ende 28 der Werkzeugspeichereinheit 2 geneigt sind, und in einem unteren Teilbereich 29 der Werkzeugspeichereinheit 2 die Wirkabschnitte 5 zu einem unteren Ende 30 der Werkzeugspeichereinheit 2 geneigt sind. Ein Ausführungsbeispiel für eine derartige Ausgestaltungsform eines Werkzeugspeichersystems ist in Fig. 2 gezeigt.

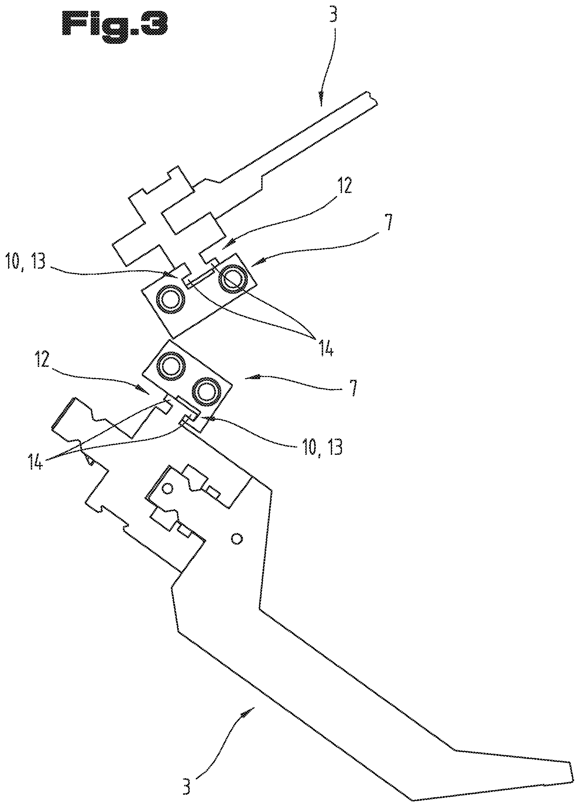

Im in Fig. 2 gezeigten Ausgestaltungsbeispiel, weisen die Halterungsabschnitte 12 der Biegewerkzeuge 3 jeweils mindestens zwei Einsteckfortsätze 14 auf, wobei einer der Einsteckfortsätze 14 in die Arbeitsrichtung 21 des Biegewerkzeugs 3 weist, und der andere Einsteckfortsatz 14 entgegen der Arbeitsrichtung 21 des Biegewerkzeugs 3 orientiert ist. Somit ist jeweils ein erster Einsteckfortsatz 14 eines Halterungsabschnittes 12 zum Zusammenwirken mit einer Aufnahmenut 13 einer in einem oberen Teilbereich 27 angeordneten Halteschiene 7 ausgebildet, und ein zweiter Einsteckfortsatz 14 zum Zusammenwirken mit einer Aufnahmenut 13 einer in einem unteren Teilbereich 29 angeordneten Halteschiene 7 ausgebildet. Durch diese bauliche Maßnahme wird erreicht, dass die Biegewerkzeuge 3 nur aufgrund von Schwerkrafteinwirkung sowohl in einem zum oberen Ende 28 der Werkzeugspeichereinheit 2 geneigten Haltemittel 10 als auch in einem zum unteren Ende 30 der Werkzeugspeichereinheit 2 geneigten Haltemittel 10 ablegbar bzw. lagerbar sind. Zum Wechseln des Speicherplatzes für ein Biegewerkzeug 3 vom oberen Teilbereich 27 in den unteren Teilbereich 29 und umgekehrt, ist lediglich eine 180°-Drehung des Biegewerkzeugs um die Arbeitsrichtung 21, sowie eine Neigung um den Schrägungswinkel 26 erforderlich.
Abschließend sind in Fig. 3 ein Biegewerkzeug 3 und eine Halteschiene 7, im Vergleich zu Fig. 2, vergrößert dargestellt. Die in Fig. 3 gezeigte Ausführungsform zeichnet sich durch eine besonders platzsparende bauliche Ausgestaltung der Haltemittel 10 bzw. Halterungsabschnitt 12 aus, da diese Bauteile im gezeigten Ausführungsbeispiel möglichst klein und platzsparend dimensioniert sind. Durch diese möglichst enge Dimensionierung, insbesondere der Aufnahmenut 13 der Halteschiene 7, und der Einsteckfortsätze 14 bzw. des Halterungsabschnitts 12 des Biegewerkzeugs 3 kann auch eine Einschränkung des Biegefreiraums in einer Biegevorrichtung weitestgehend vermieden werden, da sich klein dimensionierte Halterungsabschnitte 12 kaum störend auswirken können, bzw. den Bewegungsfreiraum einer den Biegeprozess ausführenden Manipulationsvorrichtung kaum beschränken.
Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Die den eigenständigen erfinderischen Lösungen zugrundeliegende Aufgabe kann der Beschreibung entnommen werden.

Der Ordnung halber sei darauf hingewiesen, dass zum besseren Verständnis des Aufbaus des Werkzeugspeichersystems dieses bzw. dessen Bestandteile teilweise unmaßstäblich und/oder vergrößert und/oder verkleinert dargestellt wurden.
Abschließend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

**Bezugszeichenaufstellung**

| | | | |
|---|---|---|---|
| 1 | Werkzeugspeichersystem | 31 | Roboterarm |
| 2 | Werkzeugspeichereinheit | | |
| 3 | Biegewerkzeug | | |
| 4 | Befestigungsabschnitt | | |
| 5 | Wirkabschnitt | | |
| 6 | Seitenwand | | |
| 7 | Halteschiene | | |
| 8 | Aufstandsfläche | | |
| 9 | Befestigungsbereich | | |
| 10 | Haltemittel | | |
| 11 | Länge | | |
| 12 | Halterungsabschnitt | | |
| 13 | Aufnahmenut | | |
| 14 | Einsteckfortsatz | | |
| 15 | Handhabungsvorrichtung | | |
| 16 | Zugriffsseite | | |
| 17 | Greifabschnitt | | |
| 18 | Greifwerkzeug | | |
| 19 | Greifnut | | |
| 20 | Greiffortsatz | | |
| 21 | Arbeitsrichtung | | |
| 22 | Grundkörper | | |
| 23 | Halteteil | | |
| 24 | Verbindungselement | | |
| 25 | Vertikale | | |
| 26 | Schrägungswinkel | | |
| 27 | Teilbereich | | |
| 28 | Ende | | |
| 29 | Teilbereich | | |
| 30 | Ende | | |

## Patentansprüche

1. Werkzeugspeichersystem (1) umfassend zumindest eine regalartige Werkzeugspeichereinheit (2) und darin zu lagernde Biegewerkzeuge (3) mit einem Befestigungsabschnitt (4) für die Befestigung in einer Biegemaschine und mit einem Wirkabschnitt (5) zur Bearbeitung von Werkstücken, wobei die Werkzeugspeichereinheit (2) eine Mehrzahl an zueinander parallel und insbesondere horizontal verlaufenden Halteschienen (7) mit Haltemitteln (10) zur direkten oder indirekten Halterung der Biegewerkzeuge (3) aufweist, wobei die Biegewerkzeuge (3) zusätzlich zum Befestigungsabschnitt (4) zumindest einen Halterungsabschnitt (12) aufweisen und die Haltemittel (10) zum Zusammenwirken mit den Halterungsabschnitten (12) ausgebildet sind
**dadurch gekennzeichnet, dass**
zumindest ein Haltemittel (10) durch eine Aufnahmekontur in Form einer Aufnahmenut (13) gebildet ist, welche Aufnahmenut (13) zur formschlüssigen Aufnahme zumindest eines am Halterungsabschnitt (12) ausgestalteten Einsteckfortsatzes (14) ausgestaltet ist.

2. Werkzeugspeichersystem (1) nach Anspruch 1, **dadurch gekennzeichnet, dass** zumindest ein Biegewerkzeug (3) einen Greifabschnitt (17) aufweist, welcher zum Zusammenwirken mit einem Greifwerkzeug (18) einer Handhabungsvorrichtung (15) ausgebildet ist.

3. Werkzeugspeichersystem (1) nach Anspruch 2, **dadurch gekennzeichnet, dass** der Greifabschnitt (17) durch eine Greifnut (19) gebildet ist, welche mit dem Greifwerkzeug (18) in Form eines Greiffortsatzes (20) der Handhabungsvorrichtung (15) zusammenwirkt.

4. Werkzeugspeichersystem (1) nach einem der vorhergehenden Ansprüche, **dadurch gekennzeichnet, dass** ein Halterungsabschnitt (12) und ein Greifabschnitt (17), bezogen auf eine vom Befestigungsabschnitt (4) zu einem beim Biegen auf ein Werkstück einwirkenden Wirkabschnitt (5) verlaufende Arbeitsrichtung (21) des Biegewerkzeugs (3), auf gegenüberliegenden Seiten des Biegewerkzeugs (3) angeordnet sind.

5. Werkzeugspeichersystem (1) nach einem der vorhergehenden Ansprüche, **dadurch gekennzeichnet, dass** zumindest ein Biegewerkzeug (3) aus mehr als einem Bauteil aufgebaut ist, wobei die Bauteile {22, 23} miteinander form- und/oder kraftschlüssig verbunden sind.

6. Werkzeugspeichersystem (1) nach Anspruch 5, **dadurch gekennzeichnet, dass** ein Biegewerkzeug (3) zumindest aus einem Grundkörper (22), welcher Grundkörper (22) einen beim Biegen auf ein Werkstück einwirkenden Wirkabschnitt (5) aufweist, sowie zumindest aus einem Halteteil (23), welches Halteteil (23) den Befestigungsabschnitt (4) und den Halterungsabschnitt (12) aufweist, aufgebaut ist.

7. Werkzeugspeichersystem (1) nach Anspruch 6, **dadurch gekennzeichnet, dass** im Halteteil (23) ein Greifabschnitt (17) zum Zusammenwirken mit einem Greifwerkzeug (18) einer Handhabungsvorrichtung (15) angeordnet ist.

8. Werkzeugspeichersystem (1) nach einem der vorhergehenden Ansprüche, **dadurch gekennzeichnet, dass** zumindest eine Gruppe von aufeinanderfolgenden Halteschienen (7) und/oder Haltemitteln (10) und/oder Halterungsabschnitten (12) derart ausgestaltet bzw. angeordnet bzw. aufeinander abgestimmt sind, dass eine vom Befestigungsabschnitt (4) zu einem beim Biegen auf ein Werkstück einwirkenden Wirkabschnitt (5) verlaufende Arbeitsrichtung (21) der Biegewerkzeuge (3) zu einer sich senkrecht auf eine Aufstandsfläche (8) erstreckenden Vertikalen (25) um einen Schrägungswinkel (26), ausgewählt aus einem Bereich zwischen 20° und 70° derart geneigt ist, dass im eingelagertem Zustand eines Biegewerkzeugs (3) ein zum Zusammenwirken mit einem Greifwerkzeug (18) einer Handhabungsvorrichtung (15) vorgesehener Greifabschnitt (17) in horizontaler Richtung gesehen weiter in die für den Zugriff durch eine Handhabungsvorrichtung (15) vorgesehene Zugriffsseite (16) hineinragt, als der Halterungsabschnitt (12).

9. Werkzeugspeichersystem (1) nach Anspruch 8, **dadurch gekennzeichnet, dass** in einem oberen Teilbereich (27) der Werkzeugspeichereinheit (2) die Wirkabschnitte (5) zu einem oberen Ende (28) der Werkzeugspeichereinheit (2), und in einem unteren Teilbereich (29) der Werkzeugspeichereinheit (2) die Wirkabschnitte (5) zu einem unteren Ende (30) der Werkzeugspeichereinheit (2) geneigt sind.

10. Werkzeugspeichersystem (1) nach Anspruch 8 oder 9, **dadurch gekennzeichnet, dass** der Schrägungswinkel (26) zwischen 30° und 45° beträgt.

11. Werkzeugspeichersystem (1) nach Anspruch 9 oder 10, **dadurch gekennzeichnet, dass** zumindest ein Halterungsabschnitt (12) an einem Biegewerkzeug (3) derart ausgebildet ist, dass dieser zum Zusammenwirken mit einem zum oberen Ende (28) der Werkzeugspeichereinheit (2) geneigten Haltemittel (10) und mit einem zum einem unteren Ende (30) der Werkzeugspeichereinheit (2) geneigten Haltemittel (10) ausgestaltet ist.

12. Werkzeugspeichersystem (1) nach Anspruch 11, **dadurch gekennzeichnet, dass** zumindest ein Halterungsabschnitt (12) mindestens zwei Einsteckfortsätze (14) aufweist, wobei ein erster Einsteckfortsatz (14) zum Zusammenwirken mit einer Aufnahmenut (13) einer in einem oberen Teilbereich (27) angeordneten Halteschiene (7) ist, und ein zweiter Einsteckfortsatz (14) zum Zusammenwirken mit einer Aufnahmenut (13) einer in einem oberen Teilbereich (27) angeordneten Halteschiene (7), ausgestaltet ist.

## Claims

1. A tool storage system (1) comprising at least one rack-type tool storage unit (2) and bending tools (3) to be stored therein, with an attachment section (4) for attachment in a bending machine, and with an operative section (5) for the processing of workpieces, wherein the tool storage unit (2) has a plurality of retaining rails (7). which run parallel to one another and in particular horizontally, with retaining means (10) for direct or indirect retention of the bending tools (3), wherein the bending tools (3), in addition to the attachment section (4), have at least one retaining section (12), and the retaining means (10) are designed to interact with the retaining sections (12),
**characterised in that**,
at least one retaining means (10) is formed by a reception contour in the form of a reception groove (13), which reception groove (13) is configured for the form-fit reception of at least one insertion extension (14) configured on the retaining section (12).

2. The tool storage system (1) in accordance with claim 1, **characterised in that**, at least one bending tool (3) has a gripping section (17), which is configured so as to interact with a gripping tool (18) of a handling device (15).

3. The tool storage system (1) in accordance with claim 2, **characterised in that**, the gripping section (17) is formed by a gripping groove (19), which interacts with the gripping tool (18) in the form of a gripping extension (20) of the handling device (15).

4. The tool storage system (1) in accordance with one of the preceding claims,
**characterised in that**, a retaining section (12) and a gripping section (17) are arranged on opposite sides of the bending tool (3) with respect to an operative direction (21) running from the attachment section (4) to an operative section (5) acting on a workpiece during the bending process.

5. The tool storage system (1) in accordance with one of the preceding claims,
**characterised in that**, at least one bending tool (3) is constructed from more than one component, wherein the components (22, 23) are connected to one another in a form-fit and/or force-fit manner.

6. The tool storage system (1) in accordance with claim 5, **characterised in that**, a bending tool (3) is constructed from at least one base body (22), which base body (22) has an operative section (5) acting on a workpiece during the bending process, together with at least one retaining part (23), which retaining part (23) has the attachment section (4) and the retaining section (12).

7. The tool storage system (1) in accordance with claim 6, **characterised in that**, a gripping section (17) is arranged in the retaining part (23) for interaction with a gripping tool (18) of a handling device (15).

8. The tool storage system (1) in accordance with one of the preceding claims,
**characterised in that**, at least one group of successive retaining rails (7) and/or retaining means (10) and/or retaining sections (12) are configured, or arranged, or coordinated with each other, such that an operative direction (21) of the bending tools (3) running from the attachment section (4) to an operative section (5) acting on a workpiece (21) during the bending process to a vertical (25) extending perpendicular to a contact surface (8) is inclined at an angle of inclination (26), selected from a range between 20° and 70°, such that, in the stored state of a bending tool (3), a gripping section (17), provided for purposes of interacting with a gripping tool (18) of a handling device (15), projects further, as viewed in the horizontal direction, into the access side (16) provided for access by a handling device (15) than the retaining section (12).

9. The tool storage system (1) in accordance with claim 8, **characterised in that**, in an upper subregion (27) of the tool storage unit (2), the operative sections (5) are inclined towards an upper end (28) of the tool storage unit (2) in an upper part region (27) of the tool storage unit (2), and in a lower subregion (29) of the tool storage unit (2) the operative sections (5) are inclined towards a lower end (30) of the tool storage unit (2).

10. The tool storage system (1) in accordance with claim 8 or 9, **characterised in that**, the angle of inclination (26) is between 30° and 45°.

11. The tool storage system (1) in accordance with claim 9 or 10, **characterised in that**, at least one retaining section (12) on a bending tool (3) is designed such that it is configured so as to interact with a retaining means (10) inclined towards the upper end (28) of the tool storage unit (2), and with a retaining means (10) inclined towards the lower end (30) of the tool storage unit (2).

12. The tool storage system (1) in accordance with claim 11, **characterised in that**, at least one retaining section (12) has at least two insertion extensions (14), wherein a first insertion extension (14) is configured for interaction with a reception groove (13) of a retaining rail (7) arranged in an upper subregion (27), and a second insertion extension (14) is configured for interaction with a reception groove (13) of a retaining rail (7) arranged in an upper subregion (27).

## Revendications

1. Système de stockage d'outils (1), comprenant au moins une unité de stockage d'outils (2) du type étagère et des outils de pliage (3) destinés à y être logés, avec un tronçon de fixation (4) pour la fixation dans une plieuse et avec un tronçon opérationnel (5) destiné à l'usinage de pièces, l'unité de stockage d'outils (2) présentant une pluralité de rails de retenue (7), parallèles entre eux et s'étendant en particulier horizontalement, avec des moyens de retenue (10) destinés au support direct ou indirect des outils de pliage (3), les outils de pliage (3) présentant en plus du tronçon de fixation (4) au moins un tronçon de support (12), et les moyens de retenue (10) étant constitués pour coopérer avec les tronçons de support (12),
**caractérisé en ce**
**qu'**au moins un moyen de retenue (10) est formé par un contour extérieur en forme de rainure de réception (13), laquelle rainure de réception (13) est constituée pour la réception par liaison de forme d'au moins un prolongement enfichable (14) constitué sur le tronçon de support (12).

2. Système de stockage d'outils (1) selon la revendication 1, **caractérisé en ce qu'**au moins un outil de pliage (3) présente un tronçon de préhension (17) qui est constitué pour coopérer avec un outil de préhension (18) d'un dispositif de manipulation (15).

3. Système de stockage d'outils (1) selon la revendication 2, **caractérisé en ce que** le tronçon de préhension (17) est formé par une rainure de préhension (19) qui coopère avec l'outil de préhension (18) sous la forme d'un prolongement de préhension (20) du dispositif de manipulation (15).

4. Système de stockage d'outils (1) selon l'une des revendications précédentes, **caractérisé en ce qu'**un tronçon de support (12) et un tronçon de préhension (17), par rapport à une direction de travail (21) de l'outil de pliage (3) partant du tronçon de fixation (4) et dirigée vers un tronçon opérationnel (5) agissant sur une pièce lors du pliage, sont disposés sur des côtés opposés de l'outil de pliage (3).

5. Système de stockage d'outils (1) selon l'une des revendications précédentes, **caractérisé en ce qu'**au moins un outil de pliage (3) est composé de plus d'un composant, les composants (22, 23) étant raccordés l'un à l'autre par liaison de forme et/ou de force.

6. Système de stockage d'outils (1) selon la revendication 5, **caractérisé en ce qu'**un outil de pliage (3) est composé au moins d'un corps de base (22), lequel corps de base (22) présente un tronçon opérationnel (5) agissant sur une pièce lors du pliage, ainsi que d'au moins une partie de retenue (23), laquelle partie de retenue (23) présente le tronçon de fixation (4) et le tronçon de support (12).

7. Système de stockage d'outils (1) selon la revendication 6, **caractérisé en ce que**, dans la partie de retenue (23), il est disposé un tronçon de préhension (17) destiné à coopérer avec un outil de préhension (18) d'un dispositif de manipulation (15).

8. Système de stockage d'outils (1) selon l'une des revendications précédentes, **caractérisé en ce qu'**au moins un groupe de rails de retenue (7) et/ou de moyens de retenue (10) et/ou de tronçons de support (12) qui se suivent sont constitués ou respectivement disposés ou respectivement harmonisés les uns avec les autres de telle sorte qu'une direction de travail (21) des outils de pliage (3) partant du tronçon de fixation (4) et dirigée vers un tronçon opérationnel (5) agissant sur une pièce lors du pliage est inclinée par rapport à une verticale (25) s'étendant perpendiculairement sur une surface de pose (8) en formant un angle d'hélice (26), choisi dans une plage de 20° à 70°, de telle sorte que, dans l'état entreposé d'un outil de pliage (3), un tronçon de préhension (17) prévu pour coopérer avec un outil de préhension (18) d'un dispositif de manipulation (15), vu dans la direction horizontale, dépasse plus loin dans le côté d'accès (16) prévu pour l'accès par un dispositif de manipulation (15) que ne le fait le tronçon de support (12).

9. Système de stockage d'outils (1) selon la revendication 8, **caractérisé en ce que**, dans une zone partielle (27) supérieure de l'unité de stockage d'outils (2), les tronçons opérationnels (5) sont inclinés par rapport à une extrémité supérieure (28) de l'unité de stockage d'outils (2) et, dans une zone partielle (29) inférieure de l'unité de stockage d'outils (2), les tronçons opérationnels (5) sont inclinés par rapport à une extrémité inférieure (30) de l'unité de stockage d'outils (2).

10. Système de stockage d'outils (1) selon la revendication 8 ou 9, **caractérisé en ce que** l'angle d'hélice (26) est compris entre 30° et 45°.

11. Système de stockage d'outils (1) selon la revendication 9 ou 10, **caractérisé en ce qu'**au moins un tronçon de support (12) est constitué sur un outil de pliage (3) de telle sorte qu'il est constitué pour coopérer avec un moyen de retenue (10) incliné par rapport à l'extrémité supérieure (28) de l'unité de stockage d'outils (2) et avec un moyen de retenue (10) incliné par rapport à une extrémité inférieure (30) de l'unité de stockage d'outils (2).

12. Système de stockage d'outils (1) selon la revendication 11, **caractérisé en ce qu'**au moins un tronçon de support (12) présente au moins deux prolongements enfichables (14), un premier prolongement enfichable (14) étant constitué pour coopérer avec une rainure de réception (13) d'un rail de retenue (7) disposé dans une zone partielle (27) supérieure, et un deuxième prolongement enfichable (14) étant constitué pour coopérer avec une rainure de réception (13) d'un rail de retenue (7) disposé dans une zone partielle (27) supérieure.
